# EUROPÄISCHE PATENTSCHRIFT

(11) **EP 2 985 638 B1**
(45) Veröffentlichungstag und Bekanntmachung des Hinweises auf die Patenterteilung: **10.01.2018**
(21) Anmeldenummer: 15002465.1
(22) Anmeldetag: 01.02.2013
(51) Int. Cl.: G02B 1/04, B29D 11/00

(54) **SILIKONKONTAKTLINSE MIT KONVEXER QUERSCHNITTSKONTUR**
CONTACT LENS WITH CONVEX CONTOUR OF THE CROSS-SECTION
LENTILLE DE CONTACT AVEC CONTOUR DE LA ZONE DE BORD CONVEXE

(30) Priorität: 01.02.2012 EP 12000649
(43) Veröffentlichungstag der Anmeldung: 17.02.2016
(62) Teilanmeldung aus: 13703331.2
(73) Patentinhaber: LensWista AG, 12489 Berlin (DE)
(72) Erfinder: Kordick, Thomas, DE - 63773 Goldbach (DE); Görne, Martin, DE - 22337 Hamburg (DE); Schröter, Guido, DE - 13505 Berlin (DE); Kalachev, Alexey, 12489 Berlin (DE)
(74) Vertreter: Diehl & Partner GbR

(56) Entgegenhaltungen:
- EP-A2- 0 908 476
- WO-A-2011/050365
- DE-B1- 2 414 928
- US-A- 4 285 890
- US-A- 5 466 147
- US-B1- 6 444 145

## Beschreibung

Die vorliegende Anmeldung bezieht sich auf eine "*weiche*" Kontaktlinse mit hervorragenden Trageeigenschaften.

Herkömmliche Kontaktlinsen, z. B. die aus der deutschen Gebrauchsmusterschrift G 87 10 765 U1 bekannte, weisen einen radial inneren Teil aus einem härteren, und einen radial äußeren Teil aus einem weicheren Material auf. Die Innenfläche ist vollständig konkav und die Außenfläche vollständig konvex, d. h. beide Flächen weisen eine positive Gauß'sche Krümmung auf. Diese bekannte Linse ist hinsichtlich ihres Tragekomforts nicht befriedigend.

Aus US 6,444,145 B1 ist eine zweiteilige Form zur Herstellung von Kontaktlinsen mit konturiertem Rand bekannt, bei der an der Kontaktstelle zwischen den Formteilen ein konkaver Bereich vorgesehen ist. Aus EP 0 908 476 A2 ist eine Form aus PVA bekannt, die es ermöglichen soll, an ihrer Oberfläche vorab eine hydrophile Schicht auszubilden, die dann im weiteren Prozess auf eine Kontaktlinse übertragen wird.

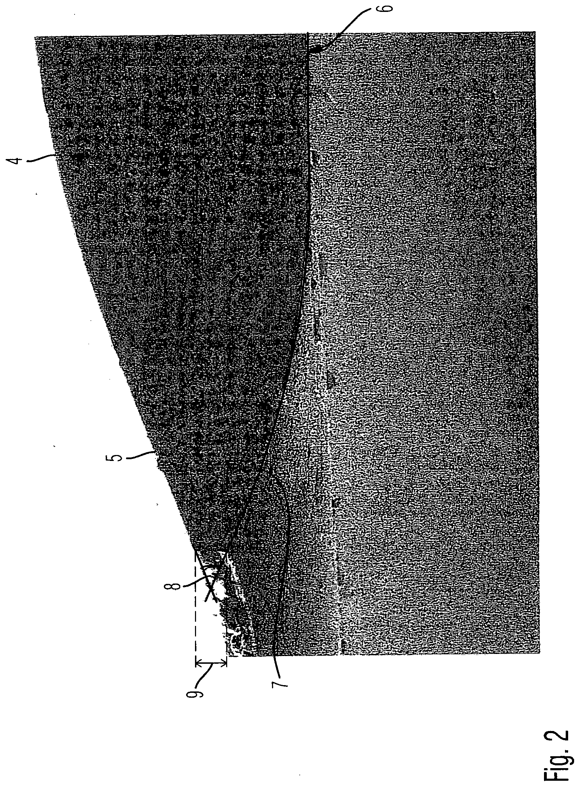

Es ist auch bekannt, eine Kontaktlinse aus Polymethylmethacrylat (PMMA) mit einer hydrophilen Beschichtung zu versehen (US 5,080,924). Dennoch wird der Tragekomfort solcher Linsen noch nicht als zufriedenstellend empfunden. US 6 444 145 B1 offenbart eine Kontaktlinse, wobei ein radialer Querschnitt der Kontaktlinse auf der Innenfläche der Kontaktlinse einen Randbereich zwischen einem Wendepunkt und der Aussenkante aufweist, in dem die Querschnittskontur konvex ist (Abb. 2, 2a) mit einem Radius von z. B. 0.01 - 0.25 mm Die Erfindung setzt sich zum Ziel, eine Kontaktlinse, die einen guten oder gar hervorragenden Tragekomfort aufweist, sowie ein Verfahren zu deren Herstellung bereitzustellen.

Dieses Problem wird gelöst durch eine Kontaktlinse aus Silikon, bei der ein radialer Querschnitt auf der Innenfläche einen Randbereich zwischen einem Wendepunkt und der Außenkante aufweist, in dem die Querschnittskontur konvex ist, und zwar mit einem Radius über 0,5 mm und/oder 0,1 bis 10 mm. Durch diese Randkontur gleitet die Linse besonders leicht auf den Tränenflüssigkeitsfilm auf.

In Ausführungsformen weist die Kontaktlinse eine Oberflächenschicht aus einem hydrophilen Material auf, was den Tragekomfort weiter verbessert.

Gemäß einem anderen Aspekt wird das Problem gelöst durch ein Verfahren, bei dem ein Silikon-Vorläufermaterial zwischen eine weibliche und eine männliche Form eingebracht und polymerisiert, und die polymerisierte Kontaktlinse mittels einer die Kontaktlinse quellenden Flüssigkeit von den Formteilen gelöst und ohne Randbeschneidung hergestellt wird. Dadurch wird das Auftreten einer Schnittkante, die als störend empfunden werden könnte, vermieden.

In Ausführungsformen wird die so erhaltene Rohlinse in einem kombinierten PECVD/CVD-Verfahren hydrophiliert, wodurch besonders dicke Beschichtungen erreicht werden, nämlich insbesondere über 1 µm dicke Beschichtungen.

Weitere Merkmale der Erfindung ergeben sich aus der nachfolgenden Beschreibung von Ausführungsbeispielen in Verbindung mit den Ansprüchen sowie den Figuren. Die Erfindung ist nicht auf die beschriebenen Ausführungsbeispiele beschränkt, sondern durch den Umfang der beiliegenden Patentansprüche bestimmt. Insbesondere können die einzelnen Merkmale bei erfindungsgemäßen Ausführungsformen in anderer Anzahl und Kombination als bei den untenstehend angeführten Beispielen verwirklicht sein. Bei der nachfolgenden Erläuterung von Ausführungsbeispielen wird auf die beiliegenden Figuren Bezug genommen, von denen
- Figur 1a: eine schematische Querschnitts-Darstellung einer auf der Hornhaut eines Auges angeordneten Kontaktlinse,
- Figur 1b: eine schematische Ausschnittvergrößerung eines Randbereichs der Kontaktlinse aus Figur 1a,
- Figur 2: eine elektronenmikroskopische Aufnahme des Randbereichs der Kontaktlinse,
- Figur 3: ein eine Oberflächenbeschichtung anzeigendes Fluoreszenz-Diagramm,
- Figur 4: ein Flussdiagramm für ein Herstellungsverfahren der erfindungsgemäßen Kontaktlinse, und
- Figur 5: eine Querschnitts-Ansicht einer zur Herstellung nach Figur 4 geeigneten Molding-Vorrichtung zeigt.

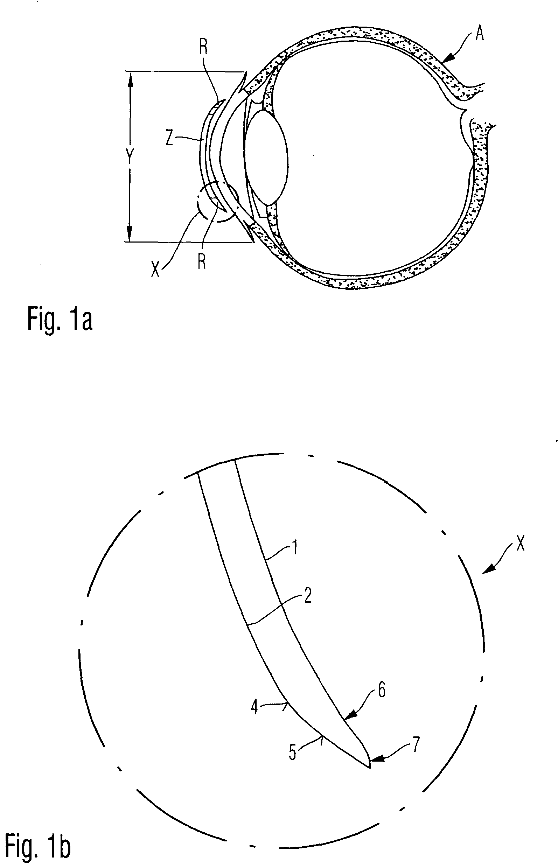

Die allgemeine Form einer Kontaktlinse ist in den Figuren 1a und 1b dargestellt: Die der Hornhaut zugewandte, in Benutzung auf einem Tränenflüssigkeitsfilm schwimmende Innenfläche 1 ist im zentralen Bereich Z konkav, und zwar rotationssymmetrisch-asphärisch mit einer Konuskonstanten von etwa -0.1 bis -0.5, also etwas elliptisch zugespitzt. Prinzipiell kann diese Fläche aber auch von der Rotationssymmetrie abweichen, wenn die physiologischen Bedingungen das erfordern. Die Außenfläche 2 der Linse ist naturgemäß konvex mit einem betragsmäßig etwas von jenem der Innenfläche abweichenden Radius, um die gewünschte dioptrische Wirkung bereitzustellen. Im Außenrandbereich R weichen die Krümmungen bzw. Radien von den zentralen Werten in folgender Weise ab: Auf der Außenfläche schließt sich radial an den zentralen Bereich ein ringförmiger Bereich 4 mit stärkerer (Einwärts-)Krümmung, also kleinerem Radius an. An diesen kann sich außen ein wiederum schwächer gekrümmter, sogar konischer (also ungekrümmter) oder geringfügig auswärts (also negativ) gekrümmter Bereich 5 anschließen. Betragsmäßig ist hier die Krümmung aber immer kleiner (d. h. der Radius größer) als in dem erstgenannten Übergangsbereich 4, d. h. die Linse läuft glatt aus.

Die Innenfläche 1 weist radial an den zentralen Bereich mit der elliptischen Fläche anschließend ebenfalls einen ringförmiger Bereich auf, der aber geringer gekrümmt, also flacher ist, was einem größeren Krümmungsradius in diesem Bereich entspricht. Hier ist der Krümmungsradius in einer Schnittebene gemeint, die die optische Achse der Linse enthält. Die von den Innenfläche und der Schnittebene gebildete Linie durchläuft einen Wendepunkt 6, d. h. die Krümmung der Linie wird zunächst Null und dann positiv. Für die Gauß'sche Flächenkrümmung bedeutet dies einen Wechsel zu negativen Werten. An diesen Bereich schließt sich dann der Bereich 7 an, wo die Innenfläche der Kontaktlinse sich an die globale Tangentialebene anschmiegt; hier ist dann die Krümmung in der zur radialen Schnittebene senkrechten Hauptkrümmungsebene Null, so dass die Gauß'sche Flächenkrümmung Null wird und noch weiter außen im unmittelbaren Kantenbereich wieder nach positiv wechselt.

Zwischen diesen beiden Krümmungswechselpunkten 6 und 7 (in der Schnittebene) bzw. -linien (auf der Oberfläche) liegt ein Bereich, in welchem sich die Kontaktlinse allmählich, von radial innen nach außen betrachtet, von der Hornhaut abhebt. Dieser Bereich ist für den Tragekomfort ausschlaggebend. Wie die Erfinder erkannt haben, sollte in diesem Bereich weder eine allzu scharfe Kante ausgebildet sein, die den auf der Hornhaut befindlichen Tränenflüssigkeitsfilm unterbrechen oder gar in die Hornhaut einschneiden könnte; noch sollte der Randbereich eine nach auswärts vorspringende, stark gekrümmte Kante ("*Skispitzen-Profil*") aufweisen, die das beim Lidschlag von außen aufgleitende Augenlid irritieren könnte. Vielmehr wird durch die erfindungsgemäß sanft auf einen schnittkantenfreien Außenrand zu laufenden ringförmigen Bereiche (siehe Figur 2) erreicht, dass ein störungsfreies Aufgleiten der Kontaktlinse auf den Tränenflüssigkeitsfilm und gleichzeitig ein störungsfreies Aufgleiten des Augenlids auf die Kontaktlinse ermöglicht ist. Es wurde gefunden, dass der Radius der Innenfläche, also die inverse Krümmung, entlang der radialen Schnittfläche, beispielsweise zwischen 0,1 und 4 mm liegen kann, oder auch einerseits über 0,5 mm oder/und andererseits unter 2 mm. Die radiale Ausdehnung des negativ gekrümmten Flächenbereichs kann 1 µm bis 1 mm betragen, zum Beispiel einerseits über 10 µm oder/und andererseits unter 100 µm. Die Außenkante selbst kann statt eines spitzen Winkels 8 zwei stumpfe aufweisen, zwischen denen sich ein z. B. 10-30 µm messender annähernd zylindrischer Außenrandbereich 9 erstreckt, wie dies in Figur 2 zu erkennen ist.

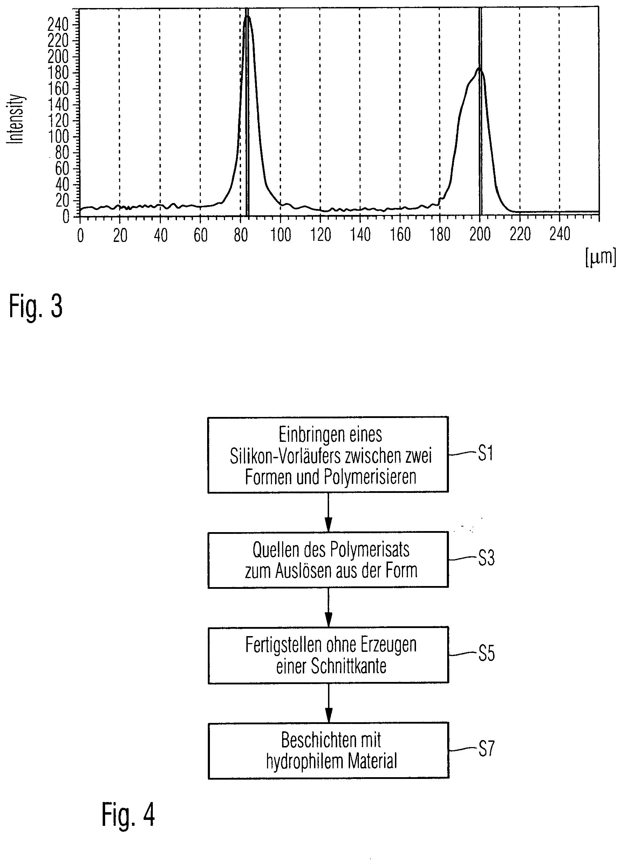

In Figur 3 ist ein Fluoreszenzdiagramm einer Oberflächenbeschichtung dargestellt, wie sie zur Hydrophilierung des an sich hydrophoben Silikon-Grundmaterials der Kontaktlinse aufgebracht werden kann. Der Kernbereich der Linse besteht aus Poly(dimethylsiloxan) mit einer Shore-A-Härte von 25. In diesem Beispiel ist zu Analysezwecken eine aufgebrachte PAA-(Polyacrylsäure)Schicht mit dem Fluoreszenzfarbstoff Rhodamin 6G eingefärbt, und die Tiefenausdehnung der Fluoreszenz durch konfokale Mikroskopie bestimmt worden. Wie man erkennt, beträgt die Gesamtdicke (Linienbreite) der PAA-Beschichtung einige 10 µm. Die Linsendicke an der Messposition (Linienabstand) beträgt 118 µm. Die Beschichtung erfolgte durch PECVD gefolgt von CVD. Während der Plasmabeschichtungsphase wurde das Druckverhältnis von einem anfangs deutlichen Argon-Überschuss (>10:1) zu einem gegen Ende ebenso deutlichen Argon-Unterschuss (<1:10) geändert, bei sinkendem Gesamtdruck. An diesen Konditionierungsschritt schloss sich eine Aufpolymerisation von wasserfreier Acrylsäure aus der Dampfphase bei ihrem Normaldampfdruck an, ohne Plasmaeinwirkung und ohne Beisein von Edelgas. Die initial plasmaunterstützt bereitgestellte Schicht hatte eine Dicke von 20-30 nm, also größenordnungsmäßig etwa ein Promille der gesamten Schichtdicke. Solche Schichten haben sowohl optisch wie auch, wegen der starken Hydrophilie, physiologisch hervorragende Eigenschaften. Der Kontaktwinkel der aufgebrachten Schicht in Wasser beträgt weniger als 10° und typischerweise 2-5°. Die günstigen Effekte der erfindungsgemäßen Formgebung werden durch diese Materialbehandlung zielgerichtet unterstützt.

In Figur 4 ist ein Flussdiagramm eines erfindungsgemäßen Verfahrens dargestellt. Zunächst werden eine weibliche und eine männliche Form bereitgestellt, und ein Vorläufermaterial für Poly(dimethylsiloxan) wird in die weibliche Form eingebracht, mit dem männlichen Teil verschlossen und bei einer Temperatur zwischen 15°C-160°C für eine Dauer von 12-720 Minuten polymerisiert S1 (molding). Nach dem Verschließen werden die beiden Formteile gegeneinander um 180° oder einen anderen hinreichend großen Winkel (>20°) verdreht, solange die Reaktionsmischung gerade noch viskos ist (über 1000 cP; typisch ca. 4000 cP), so dass überschüssiges Silikon zuverlässig abgetrennt und in den Ringraum zwischen den Formteilen verdrängt wird. Bei dieser Abschnürung wird durch Einfluss der Oberflächenspannung auch die oben beschriebene Randkontur erzeugt, die den Verzicht auf eine Randbeschneidung oder andere Randbearbeitung, die eine Schnittkante erzeugt (z. B. Stanzen), ermöglicht. Zum Demolden wird die Kontaktlinse mit einem Alkan wie z. B. Hexan oder einem anderen unpolaren oder wenig polaren Lösungsmittel angequollen S3, so dass sie sich S5 ohne mechanische Einwirkung aus der Molding-Form und von den Herstellungsteilen löst. Das Dipolmoment der Lösungsmittelmoleküle sollte dazu nicht mehr als 0,2 Debye betragen. Zur Unterstützung kann ein Ultraschallbad eingesetzt werden. Das Ausgangsmaterial kann ein flüssiges 2-Komponenten-Silikon von NuSil auf Basis von Poly(dimethylsiloxan) mit einem DK-Wert von über 700 barrer sein. Gewünschtenfalls wird die Linse nach Ausdampfen des Lösungsmittels im Vakuum in eine Beschichtungskammer überführt und zunächst mit Argonplasma gereinigt (ca. 1 min) und vorbereitet. Dann folgt eine Phase S7 mit leichtem Argonüberschuss von etwa 1:1 bis 2:1 (Partialdruckverhältnis) gegenüber Acrylsäuredampf, erhalten aus wasserfreier Acrylsäure. Beispielhafte Drücke sind 0,03 Torr für Argon und 0,015 Torr für Acrylsäure. Nach dieser Phase, die 10 bis 90 min dauert, schließt sich eine etwa zehnminütige Phase bei geschlossener Argon-Zufuhr und weiter reduziertem Acrylsäuredruck (ca. 0,1 mTorr) an. Dann wird der Plasmagenerator ausgeschaltet, und die Linse bei Raumtemperatur dem Sättigungsdampfdruck der Acrylsäure ausgesetzt, bis eine Linsentrübung den Abschluss des Vorgangs anzeigt (etwa 5 min). Die Kontaktlinse wird in hydrophiler Flüssigkeit, beispielsweise isotonischer Kochsalzlösung für 24 Stunden gewässert, um etwaige Reste des Beschichtungsagens zu entfernen, und bei über 120°C dampfsterilisiert.

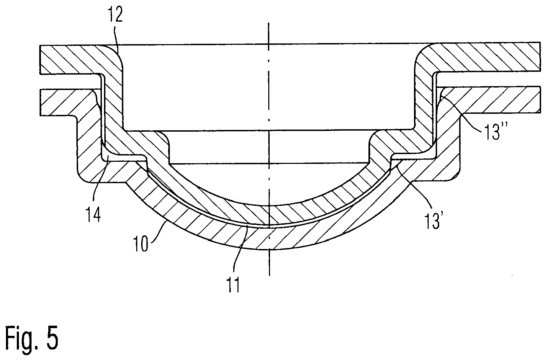

In Figur 5 ist eine zweiteilige Molding-Form gezeigt, die zur Durchführung des oben beschriebenen Verfahrens geeignet ist. Der untere, weibliche Teil 10 nimmt dabei zunächst die Reaktionsmischung auf und wird dann mit dem oberen, männlichen Teil 12 verschlossen, wobei ein mit der Reaktionsmischung gefüllter Raum 11 zwischen ihnen verbleibt. Der untere Teil 10 weist Formschrägen 13', 13" auf, die das Zusammenfügen und das Voneinander-Trennen der Formteile 10 und 12 erleichtern. Der Ringraum ist mit 14 bezeichnet.

Aus dem Verfahrensablauf ergibt sich eine Irregularität des Außenrandes insofern, als er von einer exakten Kreislinie abweicht, anders als dies z. B. von gestanzten Linsenkonturen bekannt ist. Da auch die Hornhaut niemals genau reguläre Kontur hat, ist diese Abweichung von einer Idealgestalt nicht nur nicht nachteilig, sondern hat sogar günstige Auswirkungen auf den Tragekomfort. Das Ausmaß der Irregularität kann dadurch quantifiziert werden, dass man der Projektion des Außenrandes rechnerisch, nach dem Kriterium der minimalen Abweichungsquadratsumme, eine ideal annähernde Kreisform zuordnet. Das mittlere Abweichungsquadrat ist dann ein Maß für die Irregularität, und beträgt mindestens 5000 µm² (umgerechnet auf Beträge: etwa 1 % des halben Linsendurchmessers), kann aber in Ausführungsformen auch mehr als 1000 µm² oder mehr als 10000 µm² betragen.

Die erfindungsgemäß ausgebildeten Kontaktlinsen können als Verbandlinsen Verwendung finden, d.h. mit oder ohne Brechkraft zum physikalischen Schutz der Hornhaut vor Irritationen. Dies kann als flankierende, an sich nicht-therapeutische Maßnahme bei einer medizinisch-therapeutischen Augenbehandlung nützlich sein.

In den nachfolgenden Ansprüchen wird unter einem "*überwiegenden Bestehen*" ein massemäßiger Anteil von mehr als 50 % verstanden, im Besonderen von über 90 % bis zur Gänze. Unter "*Krümmung*" ist jeweils der inverse Krümmungsradius, d.h. des Radius des Schmiegekreises zu verstehen, wobei das Vorzeichen bei konvexen Flächen positiv und bei konkaven Flächen negativ ist. Die Gauß'sche Flächenkrümmung ist das Produkt der beiden Hauptkrümmungen, also dann negativ, wenn die beiden Hauptkrümmungen unterschiedliche Vorzeichen aufweisen (Sattelfläche), und dann Null, wenn eine oder beide Hauptkrümmungen Null sind (z. B. Zylinder- und Konusfläche).

## Patentansprüche

1. Silikon-Kontaktlinse, bei der ein radialer Querschnitt der Kontaktlinse auf ihrer Innenfläche einen Randbereich zwischen einem Wendepunkt und der Außenkante aufweist, in dem die Querschnittskontur konvex ist, **gekennzeichnet durch**
einen Minimal-Radius der konvexen Querschnittskontur von über 0,5 mm und eine Oberflächenschicht aus einem hydrophilen Material.

2. Kontaktlinse nach Anspruch 1, wobei die Oberflächenschicht eine hydrophilierende Oberflächenbeschichtung ist, die insbesondere überwiegend aus (Meth)Acrylsäure-Einheiten besteht.

3. Kontaktlinse nach Anspruch 2, wobei die hydrophilierende Schicht dicker ist als 1 µm.

4. Kontaktlinse nach einem der vorstehenden Ansprüche, wobei der Minimal-Radius der konvexen Querschnittskontur bis zu 10 mm, bis zu 4 mm, oder unter 2 mm beträgt.

5. Kontaktlinse nach einem der vorstehenden Ansprüche, wobei das Silikon Poly(dimethylsiloxan) ist.

6. Kontaktlinse nach einem der vorstehenden Ansprüche, wobei der Randbereich der Kontaktlinse 1 µm bis 1 mm, insbesondere 0,01 mm bis 0,1 mm breit ist.

7. Kontaktlinse nach einem der vorstehenden Ansprüche, wobei der Außenrand der Kontaktlinse eine Irregularität aufweist, derart, dass eine dem Außenrand nach dem Kriterium des geringsten mittleren Abweichungsquadrat zugeordnete Kreislinie ein mittleres Abweichungsquadrat von mehr als 1000 µm², mindestens 5000 µm² oder mehr als 10000 µm² aufweist.

8. Verfahren zur Herstellung einer Silikon-Kontaktlinse gemäß einem der vorstehenden Ansprüche, deren radialer Querschnitt auf ihrer Innenfläche einen Randbereich zwischen einem Wendepunkt und der Außenkante aufweist, in dem die Querschnittskontur konvex ist, in welchem Verfahren ein weiblicher Formteil und ein männlicher Formteil bereitgestellt werden, und ein Silikon-Vorläufermaterial zwischen die Formteile eingebracht und dort polymerisiert wird,
**dadurch gekennzeichnet, dass**
die polymerisierte Kontaktlinse mittels einer die Kontaktlinse quellenden Flüssigkeit von den Formteilen gelöst und ohne Erzeugung einer Schnittkante hergestellt und dann mit einer Oberflächenschicht aus einem hydrophilen Material versehen wird.

9. Verfahren nach Anspruch 8, wobei die hergestellte Kontaktlinse dann in einem kombinierten PECVD/CVD-Verfahren hydrophilisierend beschichtet wird, insbesondere mit vernetzten (Meth)Acrylsäureeinheiten.

10. Verfahren nach Anspruch 9, wobei ein erster Schritt des Beschichtens in einem Niederdruck-Plasma erfolgt.

11. Verfahren nach Anspruch 10, wobei ein nachfolgender Schritt des Beschichtens ohne Plasmaeinwirkung aus der Gasphase erfolgt.

12. Verfahren nach einem der Ansprüche 8 bis 11, wobei zum Lösen der Kontaktlinse von den Formteilen eine unpolare Flüssigkeit eingesetzt wird, deren Dipolmoment insbesondere weniger als 0,2 Debye beträgt.

13. Verfahren nach einem der Ansprüche 8 bis 12, wobei die abgelöste Kontaktlinse nach dem Beschichten mit einer polaren Flüssigkeit behandelt wird, deren Dipolmoment insbesondere mehr als 1 Debye beträgt.

14. Verfahren nach einem der Ansprüche 8 bis 13, wobei die beiden Formteile bei noch flüssiger Reaktionsmischung gegeneinander rotiert werden, um den zur Bildung der Kontaktlinse vorgesehenen Teil der Reaktionsmischung von überschüssigem Material abzuschnüren.

15. Verwendung der Kontaktlinse nach einem der Ansprüche 1 bis 7, oder der nach dem Verfahren gemäß einem der Ansprüche 8 bis 14 hergestellten Kontaktlinse, als Verbandlinse zum Schutz der Hornhaut.

## Claims

1. A silicone contact lens, wherein a radial cross section of the contact lens on its inner face has a rim region between a point of inflection and the outer edge in which the cross sectional contour is convex,
**characterized by**
a minimum radius of the convex cross sectional contour of more than 0.5 mm and a surface coating of a hydrophilic material.

2. The contact lens of claim 1, wherein the surface coating is a hydrophilising surface coating, which in particular consists mainly of (meth)acrylic acid units.

3. The contact lens of claim 2, wherein the hydrophilising coating is more than 1 µm in thickness.

4. The contact lens of one of the preceding claims, wherein the minimum radius of the convex cross sectional contour is up to 10 mm, up to 4 mm, or less than 2 mm.

5. The contact lens of one of the preceding claims, wherein the silicone is poly(dimethylsiloxane).

6. The contact lens of one of the preceding claims, wherein the rim portion of the contact lens is 1 µm to 1 mm, in particular 0.01 mm to 0.1 mm in width.

7. The contact lens of one of the preceding claims, wherein the outer edge of the contact lens has an irregularity to such an extent that a circular line associated with the outer edge according to the criterion of least mean squares of the deviations has a mean square of the deviations of more than 1000 µm², at least 5000 µm², or more than 10000 µm².

8. A process for manufacturing a silicone contact lens of one of the preceding claims, the radial cross section of which on its inner face has a rim region between a point of inflection and the outer edge in which the cross sectional contour is convex, in which process a female mold part and a male mold part are provided, and a silicone precursor material is introduced in between the mold parts and is polymerized there,
**characterized in that**
the polymerized contact lens is removed from the mold parts using a liquid swelling the contact lens and is finalized without generating a cutting edge and then is provided with a surface coating of a hydrophilising material.

9. The process of claim 8, wherein the manufactured contact lens is then coated hydrophilisingly in a combined PECVD/CVD-process, in particular with crosslinked (meth)acrylic acid units.

10. The process of claim 9, wherein a first step of the coating occurs in a low pressure plasma.

11. The process of claim 10, wherein a subsequent step of the coating occurs from the gas phase without action of a plasma.

12. The process of one of claims 8 to 11, wherein a non-polar liquid is used for releasing the contact lens from the mold parts, the dipole moment of which is in particular less than 0.2 Debye.

13. The process of one of claims 8 to 12, wherein the released contact lens is treated after the coating with a polar liquid, the dipole moment of which is in particular more than 1 Debye.

14. The process of one of claims 8 to 13, wherein the two mold parts are rotated with respect to each other while the reaction mixture is still liquid, for separating the part of the reaction mixture intended for forming the contact lens from excess material.

15. Use of the contact lens of one of claims 1 to 7, or as manufactured according to the process of one of claims 8 to 14, as a bandage lens for protecting the cornea.

## Revendications

1. Lentille de contact en silicone, où une section transversale radiale de la lentille de contact présente sur sa surface intérieure entre un point d'inflexion et l'arête extérieure une zone de bord dont le contour de section transversale est convexe, **caractérisée par**
un rayon minimal du contour de section transversale convexe supérieur à 0,5 mm et une couche superficielle réalisée par un matériau hydrophile.

2. Lentille de contact selon la revendication 1, dans laquelle la couche superficielle est un revêtement superficiel hydrophilisant, qui est constitué en particulier majoritairement à partir d'unités d'acide (méth)acrylique.

3. Lentille de contact selon la revendication 2, dans laquelle la couche hydrophilisante est plus épaisse que 1 µm.

4. Lentille de contact selon l'une des revendications précédentes, dans laquelle le rayon minimal du contour de section transversale convexe vaut jusqu'à 10 mm, jusqu'à 4 mm ou vaut en dessous de 2 mm.

5. Lentille de contact selon l'une des revendications précédentes, dans laquelle le silicone est du polydiméthylsiloxane.

6. Lentille de contact selon l'une des revendications précédentes, dans laquelle la zone de bord de la lentille de contact présente une largeur de 1 µm à 1 mm, en particulier de 0,01 mm à 0,1 mm.

7. Lentille de contact selon l'une des revendications précédentes, dans laquelle le bord extérieur de la lentille de contact présente une irrégularité de telle manière qu'une ligne circulaire associée au bord extérieur selon le critère du plus petit écart quadratique moyen présente un écart quadratique moyen supérieur à 1000 µm², d'au moins 5000 µm² ou supérieur à 10 000 µm².

8. Procédé pour la fabrication d'une lentille de contact en silicone selon l'une des revendications précédentes, dont la section transversale radiale présente sur sa surface intérieure entre un point d'inflexion et l'arête extérieure une zone de bord dont le contour de section transversale est convexe, procédé dans lequel une partie moulée femelle et une partie moulée mâle sont fournies, et un matériau précurseur en silicone est introduit entre les parties moulées et y est polymérisé, **caractérisé en ce que**
la lentille de contact polymérisée est détachée des parties moulées au moyen d'un liquide faisant gonfler la lentille de contact et est fabriquée sans production d'une arête de coupe puis est pourvue d'une couche superficielle réalisée par un matériau hydrophile.

9. Procédé selon la revendication 8, dans lequel la lentille de contact fabriquée est alors revêtue de manière hydrophilisante dans un procédé combiné PECVD/CVD, en particulier avec des unités d'acide (méth)acrylique réticulés.

10. Procédé selon la revendication 9, dans lequel une première étape du revêtement est effectuée dans un plasma à basse pression.

11. Procédé selon la revendication 10, dans lequel une étape suivante du revêtement est effectuée sans effet plasma issu de la phase gazeuse.

12. Procédé selon l'une des revendications 8 à 11, dans lequel un liquide apolaire est utilisé, afin de détacher la lentille de contact des parties moulées, dont le moment dipolaire présente en particulier une valeur inférieure à 0,2 debye.

13. Procédé selon l'une des revendications 8 à 12, dans lequel la lentille de contact détachée est traitée après le revêtement avec un liquide polaire, dont le moment dipolaire présente en particulier une valeur supérieure à 1 debye.

14. Procédé selon l'une des revendications 8 à 13, dans lequel les deux parties moulées sont tournées l'une par rapport à l'autre dans le cas d'un mélange de réaction encore liquide afin de séparer par étranglement du matériau excédentaire de la partie du mélange réactionnel prévue pour la formation de la lentille de contact.

15. Utilisation de la lentille de contact selon l'une des revendications 1 à 7, ou de la lentille de contact fabriquée selon le procédé selon l'une des revendications 8 à 14 comme lentille de pansement servant à protéger la cornée.
